(19) **Europäisches Patentamt / European Patent Office / Office européen des brevets**

(11) **EP 2 345 238 B1**

(12) **FASCICULE DE BREVET EUROPEEN**

(45) Date de publication et mention
de la délivrance du brevet:
**22.08.2018 Bulletin 2018/34**

(21) Numéro de dépôt: **09768143.1**

(22) Date de dépôt: **04.11.2009**

(51) Int Cl.:
***H04N 1/04** (2006.01)*

(86) Numéro de dépôt international:
**PCT/FR2009/052131**

(87) Numéro de publication internationale:
**WO 2010/052427 (14.05.2010 Gazette 2010/19)**

(54) **PROCEDE DE NUMERISATION DE LIVRES EN TROIS DIMENSIONS PAR ONDES TERAHERTZ**

VERFAHREN ZUR DREIDIMENSIONALEN DIGITALISIERUNG VON BÜCHERN MIT TERAHERTZSTRAHLUNG

METHOD FOR THE THREE-DIMENSIONAL DIGITISATION OF BOOKS USING TERAHERTZ RADIATION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **05.11.2008 FR 0857524**

(43) Date de publication de la demande:
**20.07.2011 Bulletin 2011/29**

(73) Titulaires:
• **I2S**
**33608 Pessac (FR)**
• **Centre National de la Recherche Scientifique (C.N.R.S.)**
**75016 Paris (FR)**

(72) Inventeurs:
• **HIBERTY, Bruno**
**33608 Pessac (FR)**
• **MOUNAIX, Patrick**
**33405 Talence cedex (FR)**
• **ABRAHAM, Emmanuel**
**33405 Talence cedex (FR)**
• **AGUERRE, Cédric**
**33405 Talence cedex (FR)**
• **DESBARATS, Pascal**
**33405 Talence cedex (FR)**

(74) Mandataire: **David, Alain et al**
**Cabinet Beau de Loménie**
**158, rue de l'Université**
**75340 Paris Cedex 07 (FR)**

(56) Documents cités:
WO-A-2005/119572     US-A1- 2004 051 913
US-A1- 2007 030 536     US-A1- 2008 088 888

• **WITHAYACHUMNANKUL W ET AL: "T-Ray Sensing and Imaging" PROCEEDINGS OF THE IEEE, IEEE. NEW YORK, US, vol. 93, no. 8, 1 août 2007 (2007-08-01), pages 1528-1558, XP011193363 ISSN: 0018-9219**
• **MITTLEMAN D M ET AL: "T-RAY IMAGING" IEEE JOURNAL OF SELECTED TOPICS IN QUANTUM ELECTRONICS, IEEE SERVICE CENTER, PISCATAWAY, NJ, US, vol. 2, no. 3, 1 septembre 1996 (1996-09-01), pages 679-692, XP000689828 ISSN: 1077-260X**
• **DWIGHT L. WOOLARD ET AL: "Terahertz Frequency Sensing and Imaging: A Time of Reckoning Future Applications?" PROCEEDINGS OF THE IEEE, vol. 93, no. 10, octobre 2005 (2005-10), pages 1722-1743, XP002518638**
• **LUCA POLETTO, PIERGIORGIO NICOLOSI: "Enhancing the spatial resolution of a two-dimensional discrete array detector" OPTICAL ENGINEERING, vol. 38, no. 10, octobre 1999 (1999-10), pages 1748-1757, XP002518639**
• **NHAT NGUYEN ET AL: "A Computationally Efficient Superresolution Image Reconstruction Algorithm" IEEE TRANSACTIONS ON IMAGE PROCESSING, IEEE SERVICE CENTER, PISCATAWAY, NJ, US, vol. 10, no. 4, 1 avril 2001 (2001-04-01), XP011025769 ISSN: 1057-7149**

- **MIN KYU PARK ET AL: "Super-resolution image reconstruction: a technical overview" IEEE SIGNAL PROCESSING MAGAZINE, IEEE SERVICE CENTER, PISCATAWAY, NJ, US, vol. 20, no. 3, 1 mai 2003 (2003-05-01), pages 21-36, XP011097476 ISSN: 1053-5888**
- **PELED S ET AL: "SUPERRESOLUTION IN MRI: APPLICATION TO HUMAN WHITE MATTER FIBER TRACT VISUALIZATION BY DIFFUSION TENSOR IMAGING" MAGNETIC RESONANCE IN MEDICINE, ACADEMIC PRESS, DULUTH, MN, US, vol. 45, no. 1, 1 janvier 2001 (2001-01-01), pages 29-35, XP000981008 ISSN: 0740-3194**
- **GREENSPAN H ET AL: "MRI inter-slice reconstruction using super-resolution", MAGNETIC RESONANCE IMAGING, ELSEVIER SCIENCE, TARRYTOWN, NY, US, vol. 20, no. 5, 1 June 2002 (2002-06-01), pages 437-446, XP002297286, ISSN: 0730-725X, DOI: 10.1016/S0730-725X(02)00511-8**
- **IRANI M ET AL: "IMPROVING RESOLUTION BY IMAGE REGISTRATION", CVGIP GRAPHICAL MODELS AND IMAGE PROCESSING, ACADEMIC PRESS, DULUTH, MA, US, vol. 53, no. 3, 1 May 1991 (1991-05-01), pages 231-239, XP000200576, ISSN: 1077-3169, DOI: 10.1016/1049-9652(91)90045-L**
- **MARK R BANHAM ET AL: "Digital Image Restoration", IEEE SIGNAL PROCESSING MAGAZINE, IEEE SERVICE CENTER, PISCATAWAY, NJ, US, vol. 14, no. 2, 1 March 1997 (1997-03-01), pages 24-41, XP011089767, ISSN: 1053-5888**

## Description

<u>Domaine de la technique</u>

La présente invention concerne un procédé de numérisation de livres fermés, de documents fragiles ou difficilement séparables, reliés ou en liasses, manuscrits, peints ou imprimés sans avoir à les ouvrir, à les séparer ou à les manipuler, au moyen d'un système d'imagerie en trois dimensions de haute résolution par ondes électromagnétiques dans le domaine Térahertz (THz).

Par la suite, le domaine Térahertz désignera le domaine des ondes électromagnétiques dont la longueur d'onde est comprise entre 30 $\mu$m et 3 mm.

<u>Arrière-plan de l'invention</u>

Les inventeurs ont identifié un réel besoin de scanner ou de numériser des livres fermés, des documents fragiles ou difficilement séparables, reliés ou en liasses, manuscrits, peints ou imprimés sans avoir à les ouvrir ou à les manipuler. En effet, en raison de leur extrême fragilité, il est impératif que certains ouvrages soient maintenus fermés et à l'abri de tout rayonnement électromagnétique destructif qui pourrait altérer leur contenu (par exemple, rayons ionisants à haute énergie). De plus, un important gain de temps peut être obtenu sur la numérisation si les pages du livre n'ont pas besoin d'être tournées.

Ainsi, la présente invention trouve une application privilégiée pour la numérisation de documents imprimés, reliés ou en liasses, comprenant une pluralité de feuilles imprimées superposées les unes sur les autres.

De manière générale, un document imprimé comprend un support (feuilles de papier) sur lequel est déposé un matériau (encre) définissant une information (sous forme d'image ou de texte) à capturer ou à extraire.

Pour pouvoir capturer cette information, il est essentiel de dégager un contraste suffisant (c'est-à-dire d'observer une différence suffisante de transmission ou de réflexion des ondes) entre le support et l'encre du document considéré. Ainsi, le contraste constitue un paramètre essentiel pour la numérisation de documents imprimés.

La résolution constitue un autre paramètre essentiel pour la numérisation de documents imprimés, de façon à garantir la fidélité de la numérisation avec l'information contenue dans le document, et par exemple pouvoir faire une reproduction de ce document.

En effet, la résolution spatiale de numérisation d'un système d'imagerie est la distance entre deux points de l'objet à numériser, telle que cette distance corresponde à la dimension du plus petit élément de l'image enregistrée par ce système d'imagerie. Autrement dit, la résolution spatiale d'un système d'imagerie définit la finesse des détails qu'il est possible d'enregistrer. Le niveau de détail enregistré est d'autant plus élevé que la résolution spatiale du système est fine.

Les inventeurs ont ainsi constaté que les ondes THz sont particulièrement bien adaptées pour l'application privilégiée décrite ci-dessus, dans la mesure où celles-ci permettent d'obtenir un niveau de contraste suffisant entre le support et l'encre, tout en bénéficiant d'une résolution spatiale compatible avec la finesse des caractères à acquérir sur les pages des documents imprimés et reliés.

Selon les inventeurs, les ondes THz sont les seules ondes électromagnétiques qui possèdent simultanément :

- un pouvoir de pénétration des ondes suffisant à travers le matériau constitutif du support de l'encre,
- un contraste entre le support et l'encre exploitable pour extraire de l'information ; et
- un rayonnement non-ionisant permettant une utilisation dans un environnement non-protégé

La résolution spatiale théorique maximale $\Delta l$ d'un système d'imagerie 3D limitée par le phénomène de diffraction est calculée d'après la formule suivante :

$$\Delta l = 0.61 \frac{\lambda}{ON} \text{ (critère de Rayleigh)}$$

où $\lambda$ désigne la longueur d'onde du rayonnement électromagnétique considéré dans le système d'imagerie et ON désigne l'ouverture numérique du système d'imagerie.

Ainsi, l'utilisation d'ondes THz de longueur d'onde comprise entre 30 $\mu$m et 3 mm permet à un système d'imagerie d'atteindre une résolution spatiale théorique maximale $\Delta l$ comprise entre 36.6 $\mu$m et 3.66 mm, ce qui est proche des résolutions spatiales en rapport à la taille standard des éléments d'information que l'on trouve habituellement sur les documents imprimés. En pratique, les éléments constituant les caractères ou lettres d'un livre sont de dimension de l'ordre de quelques centaines de micromètres.

Les systèmes d'imagerie 3D THz actuels, dont un exemple est décrit dans le brevet américain US 7 119 339, ne permettent pas d'atteindre cette résolution spatiale théorique maximale. Ceci est dû notamment au fait que les systèmes THz disponibles sur le marché ont une résolution spatiale limitée par leur rapport signal sur bruit pour la fréquence considérée ou par la dimension de la source et du détecteur.

Dans un système optique de numérisation, il est connu que la résolution du détecteur (qui correspond à la taille physique de l'élément de résolution du détecteur une fois convertie sur l'objet à numériser par l'intermédiaire du grandissement du système optique) est généralement limitatrice de la résolution spatiale de numérisation du système.

En particulier, dans le cadre de l'application privilégiée décrite ci avant, les systèmes d'imagerie actuels ne permettent pas de distinguer deux pages consécutives d'un livre maintenu fermé. Pour cela, il est nécessaire que le système fournisse une résolution spatiale des images numérisées améliorées dans la dimension correspondant à l'épaisseur du livre, par rapport à la résolution spatiale obtenue dans la dimension de la largeur ou de la longueur du livre. De plus, afin de pouvoir distinguer correctement les caractères imprimés sur une page, il est donc nécessaire d'augmenter la résolution spatiale des systèmes de numérisation 3D THZ.

Objet et résumé de l'invention

La présente invention propose une solution qui ne présente pas les inconvénients des systèmes d'imagerie de l'art antérieur en introduisant un traitement numérique de super-résolution en 3D appliqué sur un ensemble d'images 3D acquises sous certaines conditions, de manière à obtenir une image 3D de résolution spatiale accrue (image 3D super-résolue).

De manière avantageuse, le traitement de super-résolution permet d'atteindre les plus hautes limites possibles par la physique sans pour autant modifier la résolution physique des détecteurs THz.

L'invention trouve une application privilégiée dans le domaine de la numérisation sans les ouvrir ou les séparer de documents imprimés, reliés ou en liasses, et également des documents fragiles et ne pouvant pas être manipulés, tels que des livres anciens ou manuscrits qui doivent être numérisés tout en étant maintenus fermés.

Ces buts sont atteints conformément à l'invention par un procédé selon la revendication 1. Le traitement numérique de super-résolution 3D selon l'invention permet de « corriger » une anisotropie de la résolution spatiale (par exemple dans la dimension Z).

Ainsi, le procédé selon l'invention permet plus facilement d'isoler les pages fines d'un livre (dans la dimension Z) dans le cas de la superposition d'images en 2D (correspondant chacune à une coupe 2D) pour générer une image en 3D. L'opération de combinaison linéaire du procédé selon la revendication 1 introduit un flou sur l'image $I_{SR}$ qu'il est nécessaire de corriger. Ce flou correspond à une convolution par une fonction d'étalement du point (Point Spread Function ou PSF).

De préférence, ledit facteur de super-résolution est identique (FSR) dans chacune des trois dimensions.

L'invention vise aussi un programme informatique sur un support d'informations, ce programme étant susceptible d'être exécuté par un processeur d'un ordinateur ou similaire, ce programme comportant des instructions de code adaptées à la mise en oeuvre des étapes d'un procédé de l'invention tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement d'informations lisible par un ordinateur, et comportant des instructions d'un programme informatique tel que mentionné ci-dessus.

Le support d'enregistrement peut être n'importe quelle entité ou dispositif capable de stocker le programme informatique. Par exemple, le support peut comporter un moyen de stockage, tel qu'une mémoire morte ROM, par exemple un CD-ROM/DVD ou une ROM de circuit microélectronique, ou encore un moyen d'enregistrement magnétique, par exemple une disquette (floppy disc) ou un disque dur.

Par ailleurs, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme informatique est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :

- la figure 1 illustre de manière schématique un exemple de réalisation du système d'imagerie 3D à ondes THz selon l'invention ;
- la figure 2 illustre sous forme d'organigramme les étapes du procédé de numérisation de livres selon l'invention ;
- la figure 3 illustre de manière schématique un livre et une image basse résolution sous forme matricielle, dans le repère $\mathfrak{R}$(O; X, Y, Z);
- la figure 4 illustre de manière schématique un exemple de réalisation du sous-système de traitement d'image par super-résolution 3D selon l'invention ; et
- la figure 5 illustre de manière schématique un exemple de réalisation d'un élément du module de restauration d'image.

Description détaillée d'un mode de réalisation

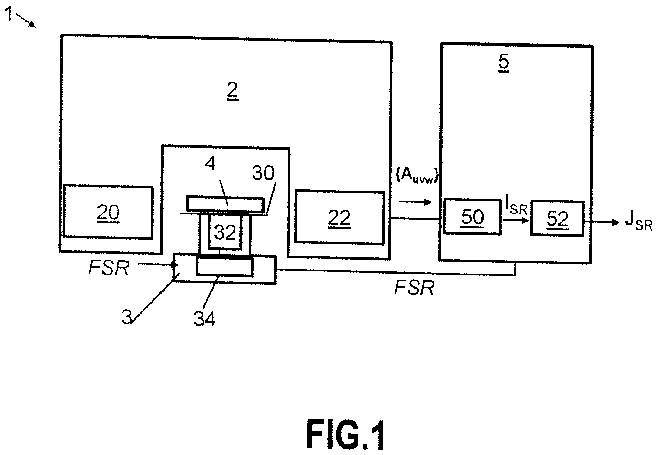

La figure 1 illustre, de manière schématique, un système d'imagerie 1 en trois dimensions (3D) à ondes Térahertz (THz) selon un mode de réalisation de la présente invention.

Le système d'imagerie 1 est constitué d'un sous-système 2 d'acquisition THz d'images en trois dimensions couplé à un sous-système 5 de traitement d'image par super-résolution 3D.

Le sous-système d'acquisition 2 est un dispositif conventionnel apte à faire l'acquisition d'un ensemble d'images en 3 dimensions représentatives d'un objet 4 à scanner. De manière connue, le sous-système d'acquisition 2 comprend notamment une source d'ondes THz 20 et un détecteur d'ondes THz 22 adapté à ladite source 20.

Un exemple de réalisation du sous-système d'acquisition 2 est décrit dans le brevet US 7,119,339. Bien évidemment, l'homme du métier pourra considérer tout autre système d'acquisition 2 d'images 3D à ondes THz apte à fournir un ensemble d'images en 3D, dans le cadre de la présente invention.

Le système d'imagerie 1 selon l'invention comprend en outre un module de déplacements super-résolution 3 adapté à déplacer l'objet 4 par rapport au sous-système d'acquisition 2 pour réaliser un déplacement de super-résolution. Ce déplacement est réalisé par des translations selon des directions X, Y, Z d'un repère orthonormé $\mathfrak{R}$(O; X, Y, Z) d'origine O comprenant trois axes orthogonaux X, Y, Z.

Le module de déplacement super-résolution 3 comprend un plateau 30 (ou platine mobile), sur lequel repose l'objet à scanner 4. Le plateau 30 est asservi par un moteur 32 qui est lui-même piloté au moyen d'un module de commande 34. Le module de commande 34 est apte à déterminer une série de déplacements dans les trois dimensions X, Y et Z à appliquer à l'objet 4 de manière séquentielle, dont les caractéristiques sont fonctions d'un facteur de super-résolution FSR préalablement sélectionné par l'utilisateur.

Le système d'imagerie 1 selon l'invention comprend en outre un sous-système de traitement d'images 5 connecté au sous-système d'acquisition 2 et au module de déplacement super-résolution 3.

Le sous-système de traitement d'images 5 comprend un module de traitement 50 d'image par super-résolution 3D et un module de restauration 52 d'image super-résolue.

Le module de traitement 50 comprend des moyens logiciels adaptés à générer une image 3D super-résolue $I_{SR}$ à partir de l'ensemble des images 3D acquises $\{A_{uvw}\}$ par le sous-système d'acquisition 2 lors de la séquence de déplacements de super-résolution.

Les images 3D $\{A_{uvw}\}$ ainsi acquises ayant une résolution spatiale plus basse dans chaque dimension que l'image super-résolue $I_{SR}$, seront qualifiées de basse résolution dans la suite de la description.

Le module de restauration 52 comprend des moyens logiciels adaptés à fournir une image super-résolue restaurée $J_{SR}$ à partir de l'image super-résolue $I_{SR}$ fournie en sortie du module de traitement 50.

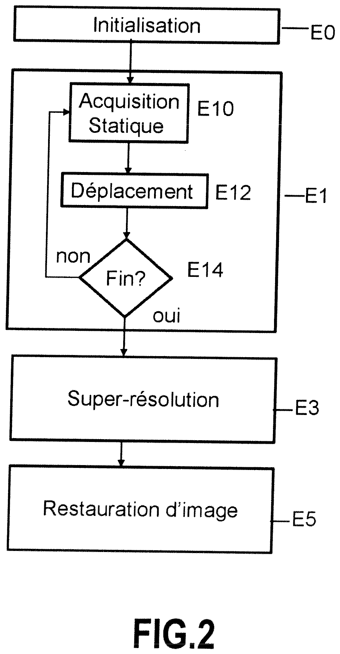

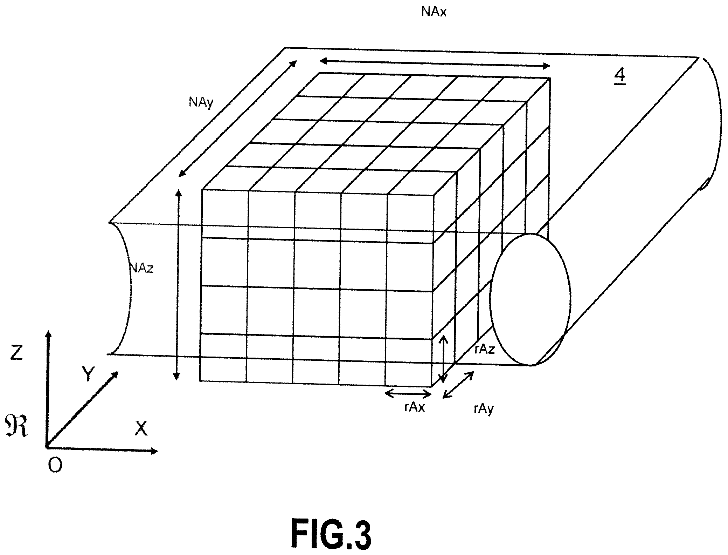

Le procédé d'imagerie selon l'invention mettant en oeuvre le système d'imagerie 1 va être maintenant décrit en référence aux figures 2 et 3.

Comme illustré sur la figure 3, l'objet 4 à numériser est un livre comprenant une pluralité de pages reliées et imprimées, ce livre 4 étant maintenu fermé pendant toute la durée du procédé d'imagerie selon l'invention.

Lors d'une étape préalable d'initialisation E0, un opérateur procède à la calibration du système d'imagerie 1. Pour cela, une prise de référence est réalisée sans le livre 4 qui est ensuite positionné à une position de référence P1 notée (0, 0, 0) dans le repère $\mathfrak{R}$.

Le module de commande 34 détermine en fonction d'un facteur de super-résolution FSR, un ensemble de déplacements à appliquer au livre 4 dans les trois dimensions, définissant ainsi une pluralité de positions $P_1$, $P_2$, $P_3$, ... $P_K$ du livre 4. A ce stade, le système d'imagerie 1 est calibré.

Le facteur de super-résolution FSR est un paramètre essentiel du procédé selon l'invention. Ce facteur définit le gain en résolution spatiale obtenue par l'opération de super-résolution par rapport aux images basse résolution et est utilisé notamment pour déterminer le nombre total d'images 3D basse résolution à acquérir par le sous-système d'acquisition 2 et ainsi le nombre de positions. La valeur du facteur de super-résolution FSR est un entier naturel supérieur ou égal à 1. Par exemple, en supposant que la résolution spatiale $rA_Z$ d'une image basse résolution selon l'axe Z est égale à 1 mm, et que l'épaisseur h d'une page du livre 4 est environ égale à 80 $\mu$m, l'utilisateur choisit alors FSR = 13 comme calculé selon la formule ci-dessous :

$$FSR = Int\left(\frac{rA_z}{h}\right) + 1 = Int\left(\frac{1}{0.08}\right) + 1 = 13$$

où *Int* désigne la fonction « partie entière ».

Ainsi, en pratique, une valeur de FSR proche de 13 est nécessaire pour scanner les pages du livre 4.

On notera que le facteur de super-résolution FSR peut être distinct pour chaque dimension considérée. Dans ce cas, on introduit les facteurs $FSR_X$, $FSR_Y$ et $FSR_Z$ qui correspondent respectivement aux facteurs de super-résolution dans les dimensions X, Y et Z.

Conformément à la présente invention, les déplacements déterminés par le module de commande 34 sont tels que leur amplitude (ou « pas ») est inférieure à la résolution spatiale du sous-système d'acquisition 2. En pratique, l'amplitude de ces déplacements correspond à une fraction de la résolution spatiale du sous-système d'acquisition 2.

L'amplitude $M_X$, $M_Y$, $M_Z$ des déplacements en translation selon les dimensions X, Y, Z est respectivement définie par :

$$M_X = \frac{rA_X}{FSR_X}; \quad M_Y = \frac{rA_Y}{FSR_Y}; \quad M_Z = \frac{rA_Z}{FSR_Z}$$

où $rA_X$, $rA_Y$, $rA_Z$ représentent les résolutions spatiales d'une image basse résolution dans les dimensions X, Y, Z respectivement.

A titre d'exemple illustratif et non limitatif, nous considérons le cas où $FSR = FSR_X = FSR_Y = FSR_Z = 2$, dans le seul but de simplifier les calculs dans la description qui va suivre.

Dans ce cas, le module de commande 34 détermine que les amplitudes des déplacements (translations) à appliquer dans les directions X, Y, et Z sont respectivement :

$$M_X = \frac{rA_X}{2}; \quad M_Y = \frac{rA_Y}{2}; \quad M_Z = \frac{rA_Z}{2}$$

A ce stade et pour ces valeurs de FSR, le système d'imagerie 1 selon l'invention est calibré.

Lors d'une étape d'acquisition E1, l'ensemble d'images en 3D noté $\{A_{uvw}\}$ est obtenu par le sous-système d'acquisition 2, au cours d'une séquence de déplacements du livre 4 par rapport au sous-système d'acquisition 2 selon les déplacements préalablement déterminés par le module de commande 34.

L'étape d'acquisition E1 se décompose selon les sous-étapes suivantes. Lors d'une sous-étape d'acquisition statique E10, le sous-système d'acquisition 2 acquiert une image 3D du livre 4 dans une position donnée. Lors d'une sous-étape de déplacement E12, le module de commande 34 provoque le déplacement du plateau 30 sur lequel repose le livre 4 selon un déplacement préalablement calculé, définissant ainsi une nouvelle position du livre 4. Les sous-étapes d'acquisition statique E10 et de déplacement E12 sont réitérées, tant qu'il reste des déplacements préalablement définis à appliquer au livre (étape de test E14 négative).

A l'issue de l'étape d'acquisition (étape de test E14 positive), un nombre $FSR_X$ x $FSR_Y$ x $FSR_Z$ d'images 3D basse résolution $A_{uvw}$ a été acquis par le sous-système d'acquisition 2. Ce nombre d'images $FSR_X$ x $FSR_Y$ x $FSR_Z$ correspond au nombre de positions du livre 4, étant donné que le sous-système d'acquisition 2 acquiert une image 3D basse résolution $A_{uvw}$ où u, v, w représentent respectivement les indices des déplacements suivant les directions X , Y et Z, pour chaque position occupée par le livre 4.

Les différentes coordonnées des positions sont déterminées dans le repère $\mathfrak{R}$(O; X, Y, Z) par la formule :

$$\left(u \times \frac{rA_X}{FSR_X}, v \times \frac{rA_Y}{FSR_Y}, w \times \frac{rA_Z}{FSR_Z}\right),$$

avec $0 \leq u < FSR_X$ ; $0 \leq v < FSR_Y$ ; $0 \leq w < FSR_Z$

Dans le cas où FSR = 2, le nombre de positions est égal à FSR^3 c'est-à-dire 8 comme indiqué dans le tableau 1 ci-dessous. Sur chaque ligne de ce tableau 1 figure une position identifiée par un triplet de coordonnées cartésiennes

dans le repère $\mathfrak{R}$, en association avec une image 3D basse résolution $A_{uvw}$ où u, v, w représentent respectivement le décalage suivant les directions X, Y et Z.

Tableau 1.

| Position # | (X, Y, Z) | $A_{uvw}$ |
|---|---|---|
| Position 1 | (0,0,0) | $A_{000}$ |
| Position 2 | $\left(\dfrac{rA_x}{2},0,0\right)$ | $A_{100}$ |
| Position 3 | $\left(\dfrac{rA_x}{2},\dfrac{rA_y}{2},0\right)$ | $A_{110}$ |
| Position 4 | $\left(\dfrac{rA_x}{2},\dfrac{rA_y}{2},\dfrac{rA_z}{2}\right)$ | $A_{111}$ |
| Position 5 | $\left(0,\dfrac{rA_y}{2},\dfrac{rA_z}{2}\right)$ | $A_{011}$ |
| Position 6 | $\left(0,0,\dfrac{rA_z}{2}\right)$ | $A_{001}$ |
| Position 7 | $\left(\dfrac{rA_x}{2},0,\dfrac{rA_z}{2}\right)$ | $A_{101}$ |
| Position 8 | $\left(0,\dfrac{rA_y}{2},0\right)$ | $A_{010}$ |

Lors d'une étape de traitement E3 par super-résolution 3D, l'ensemble des images 3D $\{A_{uvw}\}$ basse résolution est traité par le module de traitement 50 de super-résolution 3D, de manière à générer l'image en 3D super-résolue $I_{SR}$.

Lors d'une étape de restauration d'image E5, l'image 3D super-résolue est corrigée par le module de restauration 52, de manière à générer l'image en 3D super-résolue restaurée $J_{SR}$.

L'étape de traitement E3 et l'étape de restauration d'image E5 vont maintenant être décrites de manière détaillée en référence à la figure 3.

De manière générale, chaque image $A_{uvw}$ de basse résolution est représentée sous la forme d'une matrice en trois dimensions, de dimension $NA_X$, $NA_Y$ et $NA_Z$ selon les axes X, Y, Z du repère orthonormé $\mathfrak{R}$.

$A_{uvw}$ (p, q, r) désigne l'élément d'image (volumetric pixel ou voxel) se trouvant à la coordonnée p de la dimension X, la coordonnée q de la dimension Y et la coordonnée r de la dimension Z de la matrice $A_{uvw}$. La résolution spatiale de l'image $A_{uvw}$ est caractérisée dans les trois dimensions par les résolutions spatiales ($rA_X$, $rA_Y$, $rA_Z$) du sous-système d'acquisition 2 respectivement selon les axes X, Y, Z du repère $\mathfrak{R}$. Par exemple, $rA_X = rA_Y = rA_Z = 1$ mm.

L'image 3D super-résolue $I_{SR}$ est représentée sous la forme d'une matrice en trois dimensions, de dimension $N_X$, $N_Y$ et $N_Z$ selon les axes X, Y, Z du repère orthonormé $\mathfrak{R}$. Pour simplifier la description, on considère le cas où $N_X = N_Y = N_Z = N$ et que l'image super-résolue $I_{SR}$ est représentée par une matrice cubique de dimension $N \times N \times N$, où N désigne un entier naturel non nul.

Chaque élément matriciel $I_{SR}(i+a,j+b,k+c)$ désigne le voxel de l'image 3D super-résolue $I_{SR}$ se trouvant à la coordonnée i+a de la dimension X, la coordonnée j+b de la dimension Y et la coordonnée k+c de la dimension Z de la matrice, avec i, j, k désignant des entiers naturels multiples de la valeur du facteur de super-résolution FSR et tels que $0 \leq i, j, k < N$, et avec a, b, c des variables entières telles qu'elles prennent leurs valeurs dans l'ensemble 0, 1, 2, ...,FSR-1.

La résolution spatiale de l'image $I_{SR}$ est caractérisée dans les trois dimensions par les résolutions spatiales $(r_X, r_Y, r_Z)$ respectivement selon les axes X, Y, Z du repère orthonormé $\mathfrak{R}$.

De manière générale, l'image super-résolue $I_{SR}$ a une résolution améliorée d'un facteur $FSR_X$, $FSR_Y$, $FSR_Z$ dans les dimensions X, Y, Z respectivement, par rapport à la résolution des images $A_{uvw}$. La relation entre la résolution spatiale $(r_X, r_Y, r_Z)$ de l'image super-résolue $I_{SR}$ et la résolution spatiale $(rA_X, rA_Y, rA_Z)$ d'une image $A_{uvw}$ est donnée par :

$$r_X = \frac{rA_X}{FSR_X}; \quad r_X = \frac{rA_Y}{FSR_Y}; \quad r_Z = \frac{rA_Z}{FSR_Z} .$$

Ainsi, dans le cas où $FSR_X = FSR_Y = FSR_Z = FSR = 2$, la résolution spatiale $(r_X, r_Y, r_Z)$ de l'image super-résolue $I_{SR}$ est améliorée d'un facteur FSR=2 par rapport à la résolution spatiale $(rA_X, rA_Y, rA_Z)$ des images $A_{uvw}$ .

L'image 3D super-résolue comprend au total $FSR_X$ x $FSR_Y$ x $FSR_Z$ plus de voxels que chaque image $A_{uvw}$ ($FSR_X$ fois plus dans la dimension X, $FSR_Y$ fois plus dans la dimension Y et $FSR_Z$ fois plus dans la dimension Z). Ainsi, dans le cas particulier où $FSR_X = FSR_Y = FSR_Z = FSR = 2$, on a 8 fois plus de voxels dans l'image $I_{SR}$ que dans chaque image $A_{uvw}$.

Conformément à la présente invention, l'image 3D super-résolue $I_{SR}$ est obtenue en combinant l'ensemble des images 3D basse résolution $A_{uvw}$ comme indiqué dans l'équation 1 ci-dessous (cas où $FSR_X = FSR_Y = FSR_Z = FSR$). D'un point de vue mathématique, l'image 3D super-résolue $I_{SR}$ est une combinaison linéaire de FSR^3 images 3D $A_{uvw}$.

$$I_{SR}(i+a, j+b, k+c) = \frac{1}{FSR^3} \left[ \begin{array}{l} \sum_{u=0}^{a}\sum_{v=0}^{b}\sum_{w=0}^{c} A_{uvw}(p,q,r) + \sum_{u=a+1}^{FSR-1}\sum_{v=0}^{b}\sum_{w=0}^{c} A_{uvw}(p-1,q,r) \\[1em] + \sum_{u=0}^{a}\sum_{v=b+1}^{FSR-1}\sum_{w=0}^{c} A_{uvw}(p,q-1,r) + \sum_{u=a+1}^{FSR-1}\sum_{v=b+1}^{FSR-1}\sum_{w=0}^{c} A_{uvw}(p-1,q-1,r) \\[1em] + \sum_{u=0}^{a}\sum_{v=0}^{b}\sum_{w=c+1}^{FSR-1} A_{uvw}(p,q,r-1) + \sum_{u=a+1}^{FSR-1}\sum_{v=0}^{b}\sum_{w=c+1}^{FSR-1} A_{uvw}(p-1,q,r-1) \\[1em] + \sum_{u=0}^{a}\sum_{v=b+1}^{FSR-1}\sum_{w=c+1}^{FSR-1} A_{uvw}(p,q-1,r-1) + \sum_{u=a+1}^{FSR-1}\sum_{v=b+1}^{FSR-1}\sum_{w=c+1}^{FSR-1} A_{uvw}(p-1,q-1,r-1) \end{array} \right]$$

Équation 1

où :

$I_{SR}$ désigne l'image super-résolue de dimension N x N x N ;
FSR désigne le facteur de super-résolution, dont la valeur est un entier naturel supérieur ou égal à 1 ;
$I_{SR}$(i+a, j+b, k+c) désigne le voxel de l'image $I_{SR}$ se trouvant à la coordonnée i+a de la dimension X, la coordonnée j+b de la dimension Y et la coordonnée k+c de la dimension Z de la matrice $I_{SR}$, avec i, j, k multiples de FSR, tels que $0 \leq i, j, k < N$, et avec a, b, c des variables entières telles qu'elles prennent leurs valeurs dans l'ensemble 0, 1, 2, ..., FSR-1 ;
$\{A_{uvw}, 0 \leq u, v, w < FSR\}$ est l'ensemble des images 3D de basse résolution, où u, v, w représente respectivement l'indice de la position de l'image dans respectivement les directions X, Y et Z ;
$A_{uvw}$(p, q, r) désigne le voxel de l'image $A_{uvw}$ se trouvant à la coordonnée p de la dimension X, la coordonnée q de la dimension Y et la coordonnée r de la dimension Z de la matrice $A_{uvw}$, avec $p = \dfrac{i}{FSR}; \quad q = \dfrac{j}{FSR}; \quad r = \dfrac{k}{FSR} .$

Ainsi, suivant l'axe X, l'image super-résolue $I_{SR}$ possède $N_X = NA_X \times FSR$ points dont les coordonnées (entières) parcourent l'ensemble [0, $N_X$-1], avec $N_X$= N. La variable i parcourt ces coordonnées par blocs de FSR points. Les valeurs successives de i sont donc i=0, FSR, 2xFSR, 3xFSR, ..., ($NA_X$-1)$\times$FSR. La variable entière a $\in$ {0, 1, 2, ..., FSR-1} est telle que i+a définit l'ensemble des points de la matrice $I_{SR}$ selon l'axe X, avec (i+a) $\in$ {0, 1, 2, ..., $N_X$-1}. Les variables entières (j, b) et (k, c) jouent le même rôle que (i, a) selon les axes Y et Z respectivement.

De manière plus générale, on peut considérer le cas où le facteur de super-résolution FSR est différent pour chaque dimension considérée. Dans ce cas, on introduit dans l'équation (1) les facteurs $FSR_X$, $FSR_Y$, $FSR_Z$ qui correspondent respectivement aux facteurs de super-résolution dans les dimensions X, Y et Z. On obtient alors l'équation (2) ci-dessous :

$$I_{SR}(i+a, j+b, k+c) = \frac{1}{FSR_X * FSR_Y * FSR_Z} \left[ \begin{array}{l} \sum_{u=0}^{a}\sum_{v=0}^{b}\sum_{w=0}^{c} A_{uvw}(p,q,r) + \sum_{u=a+1}^{FSR_X-1}\sum_{v=0}^{b}\sum_{w=0}^{c} A_{uvw}(p-1,q,r) \\ + \sum_{u=0}^{a}\sum_{v=b+1}^{FSR_Y-1}\sum_{w=0}^{c} A_{uvw}(p,q-1,r) + \sum_{u=a+1}^{FSR_X-1}\sum_{v=b+1}^{FSR_Y-1}\sum_{w=0}^{c} A_{uvw}(p-1,q-1,r) \\ + \sum_{u=0}^{a}\sum_{v=0}^{b}\sum_{w=c+1}^{FSR_Z-1} A_{uvw}(p,q,r-1) + \sum_{u=a+1}^{FSR_X-1}\sum_{v=0}^{b}\sum_{w=c+1}^{FSR_Z-1} A_{uvw}(p-1,q,r-1) \\ + \sum_{u=0}^{a}\sum_{v=b+1}^{FSR_Y-1}\sum_{w=c+1}^{FSR_Z-1} A_{uvw}(p,q-1,r-1) + \sum_{u=a+1}^{FSR_X-1}\sum_{v=b+1}^{FSR_Y-1}\sum_{w=c+1}^{FSR_Z-1} A_{uvw}(p-1,q-1,r-1) \end{array} \right]$$

Équation 2

où :

$I_{SR}$ désigne l'image super-résolue de dimension $N_X$, $N_Y$, Nz ;

$FSR_X$, $FSR_Y$, $FSR_Z$ désignent les facteurs de super-résolution selon X, Y et Z dans un repère orthonormé $\mathfrak{R}$ (O; X, Y, Z), dont les valeurs sont des entiers naturels supérieurs ou égaux à 1 ;

$I_{SR}$(i+a, j+b, k+c) désigne le voxel de l'image $I_{SR}$ se trouvant à la coordonnée i+a de la dimension X, la coordonnée j+b de la dimension Y et la coordonnée k+c de la dimension Z de la matrice $I_{SR}$, avec i multiple de $FSR_X$ tel que 0 $\leq$ i < $N_X$, j multiple de $FSR_Y$ tel que 0 $\leq$ j < $N_Y$, k multiple de $FSR_Z$ tel que 0 $\leq$ k < Nz, et avec a, b, c des variables entières telles qu'elles prennent leurs valeurs dans l'ensemble 0, 1, 2, ..., $FSR_X$-1 (respectivement $FSR_Y$-1, $FSR_Z$-1) ; {$A_{uvw}$, avec 0 $\leq$ u < $FSR_X$ ; 0 $\leq$ v < $FSR_Y$ 0 $\leq$ w < $FSR_Z$ } est l'ensemble des images 3D de basse résolution, où u, v, w représentent l'indice de la position de l'image dans respectivement les dimensions X, Y et Z ;

$A_{uvw}$(p, q, r) désigne le voxel de l'image $A_{uvw}$ se trouvant à la coordonnée p de la dimension X, la coordonnée q de la dimension Y et la coordonnée r de la dimension Z de la matrice $A_{uvw}$, avec $p = \dfrac{i}{FSR_X}$ ; $q = \dfrac{j}{FSR_Y}$ ;

$r = \dfrac{k}{FSR_Z}$ .

Les inventeurs ont constaté que le processus de combinaison de FSR^3 (ou $FSR_X$ x $FSR_Y$ x $FSR_Z$) images en trois dimensions selon l'équation 1 (respectivement équation 2) introduit un phénomène de flou sur l'image super-résolue $I_{SR}$. Il convient donc de corriger ce flou sur l'image super-résolue $I_{SR}$ afin d'améliorer la qualité de cette image.

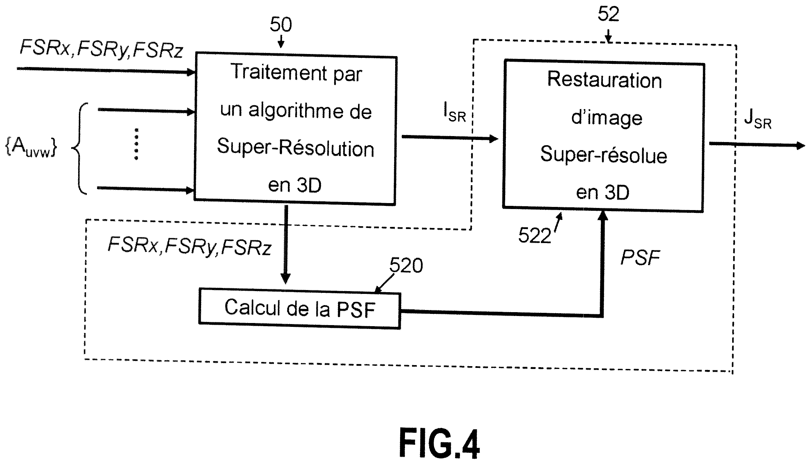

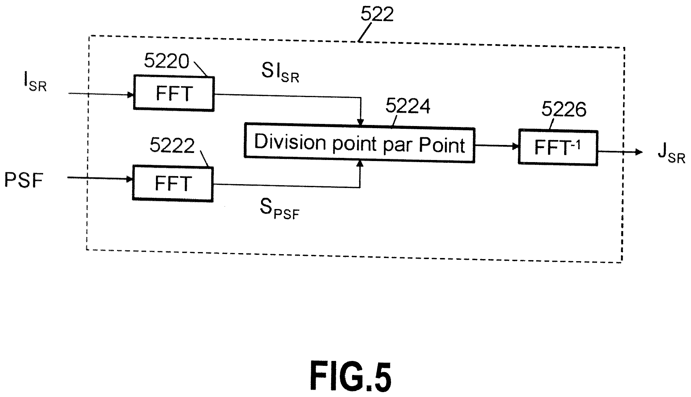

Pour cela, l'étape de restauration d'image E5 effectuée par le module de restauration 52 va être décrite ci-dessous de manière détaillée en référence aux figures 4 et 5.

Le phénomène de flou constaté dans l'image 3D super-résolue $I_{SR}$ est dû à un lissage qui peut être décrit par la convolution par une matrice représentant une fonction d'étalement de points dite PSF : « Point Spread Function »

La PSF peut être calculée de manière connue.

Le module de restauration 52 comprend des premiers moyens logiciels 520 pour calculer la PSF à partir du modèle mathématique impliqué dans le processus de super-résolution selon l'équation 1 ou l'équation 2 décrites ci-dessus. La PSF est déterminée selon des algorithmes de filtrage numérique connus, en utilisant des paramètres spécifiques à l'étape de super-résolution E3, tels que le facteur de super-résolution FSR^3 ou ($FSR_X$, $FSR_Y$, $FSR_Z$).

Plus précisément, la fonction d'étalement de point est un filtre passe-bas moyenneur qui correspond à une convolution par une matrice 3D de dimensions $FSR_X$, $FSR_Y$, $FSR_Z$ à valeurs uniformes:

$$I_{SR} = J_{SR} \otimes PSF$$

où $J_{SR}$ est l'image nette (sans flou), $\otimes$ représente un produit de convolution, et PSF est une matrice de dimensions $FSR_X$ x $FSR_Y$ x $FSR_Z$ dont les valeurs sont uniformes et égales en chaque point à la valeur

$$\frac{1}{FSR_X \times FSR_Y \times FSR_Z}.$$

Par exemple, dans le cas où $FSR_X=FSR_Y=2$ et $FSR_Z=1$, la PSF est donnée par :

$$PSF = \frac{1}{4} \times \begin{vmatrix} 1 & 1 \\ 1 & 1 \end{vmatrix}$$

Le module de restauration 52 comprend en outre des seconds moyens logiciels 522 aptes à déconvoluer l'image super-résolue $I_{SR}$ au moyen du filtre passe-bas moyenneur (PSF) calculé précédemment. Plus particulièrement comme illustré dans l'exemple de la figure 5, il comporte un premier module 5220 de transformée de Fourier qui fournit un spectre $SI_{SR}$ de l'image super-résolue $I_{SR}$ selon un algorithme de type FFT (« Fast Fourier Transform »), un deuxième module 5222 de transformée de Fourier fournit une réponse fréquentielle $S_{PSF}$ du filtre passe-bas moyenneur (PSF) et un module diviseur 5224 effectue une division point par point du spectre $SI_{SR}$ de l'image super-résolue $I_{SR}$ et de la réponse fréquentielle $S_{PSF}$ pour délivrer un spectre de l'image super-résolue corrigée dans le domaine de Fourier auquel est appliquée au moyen d'un module 5226 de transformée de Fourier inverse, une transformée de Fourier inverse selon un algorithme de type FFT[1] pour délivrer l'image super-résolue restaurée $J_{SR}$.

Bien que la description détaillée ci-dessus concerne un mode de réalisation dans lequel l'objet 4 est déplacé et le sous-système d'acquisition 2 est maintenu fixe face à la source 20, il est clair que l'invention s'applique également à un mode de réalisation alternatif dans lequel l'objet est maintenu fixe et l'ensemble sous-système d'acquisition est déplacé autour de l'objet.

## Revendications

1. Procédé de numérisation de livres fermés sans avoir à les ouvrir, de documents imprimés ou manuscrits, reliés ou en liasses, sans avoir à les séparer, au moyen d'un système d'imagerie d'un objet en trois dimensions par ondes Térahertz comprenant une étape d'acquisition par un sous-système d'acquisition THz d'un ensemble d'images basse résolution en trois dimensions $\{A_{uvw}\}$ représentatives dudit objet, lesdites images 3D basse résolution étant obtenues par application de déplacements en translation en trois dimensions orthogonales selon lequel l'objet et le sous-système d'acquisition THz sont déplacés relativement l'un par rapport à l'autre, et l'amplitude du déplacement relatif ($M_X$, $M_Y$, $M_Z$) dans chacune de ces trois dimensions étant égale au rapport de la résolution spatiale ($rA_x$, $rA_y$, $rA_z$) dudit sous-système d'acquisition Thz par un facteur de super-résolution FSR ($FSR_X$, $FSR_Y$, $FSR_Z$), une étape de traitement de super-résolution en trois dimensions (E3), apte à générer une image 3D super-résolue $I_{SR}$ à partir d'une combinaison linéaire desdites images 3D basse résolution et une étape de restauration d'image (E5) apte à générer une image 3D super-résolue restaurée $J_{SR}$ à partir d'une déconvolution par une fonction d'étalement de points (PSF) de ladite image 3D super-résolue $I_{SR}$ ladite combinaison linéaire desdites images 3D étant déterminée par l'équation suivante :

$$I_{SR}(i+a,j+b,k+c) = \frac{1}{FSR_X * FSR_Y * FSR_Z} \left[ \begin{array}{l} \sum_{u=0}^{a}\sum_{v=0}^{b}\sum_{w=0}^{c}A_{uvw}(p,q,r) + \sum_{u=a+1}^{FSR_X-1}\sum_{v=0}^{b}\sum_{w=0}^{c}A_{uvw}(p-1,q,r) \\[2em] + \sum_{u=0}^{a}\sum_{v=b+1}^{FSR_Y-1}\sum_{w=0}^{c}A_{uvw}(p,q-1,r) + \sum_{u=a+1}^{FSR_X-1}\sum_{v=b+1}^{FSR_Y-1}\sum_{w=0}^{c}A_{uvw}(p-1,q-1,r) \\[2em] + \sum_{u=0}^{a}\sum_{v=0}^{b}\sum_{w=c+1}^{FSR_Z-1}A_{uvw}(p,q,r-1) + \sum_{u=a+1}^{FSR_X-1}\sum_{v=0}^{b}\sum_{w=c+1}^{FSR_Z-1}A_{uvw}(p-1,q,r-1) \\[2em] + \sum_{u=0}^{a}\sum_{v=b+1}^{FSR_Y-1}\sum_{w=c+1}^{FSR_Z-1}A_{uvw}(p,q-1,r-1) + \sum_{u=a+1}^{FSR_X-1}\sum_{v=b+1}^{FSR_Y-1}\sum_{w=c+1}^{FSR_Z-1}A_{uvw}(p-1,q-1,r-1) \end{array} \right]$$

où :

$I_{SR}$ désigne l'image super-résolue de dimension $N_X$, $N_Y$, $N_Z$ ;

$FSR_X$, $FSR_Y$, $FSR_Z$ désignent les facteurs de super-résolution selon X, Y et Z dans un repère orthonormé $\mathfrak{R}$ (O; X, Y, Z), dont les valeurs sont des entiers naturels supérieurs ou égaux à 1 ;

$I_{SR}(i+a, j+b, k+c)$ désigne le voxel de l'image $I_{SR}$ se trouvant à la coordonnée i+a de la dimension X, la coordonnée j+b de la dimension Y et la coordonnée k+c de la dimension Z de la matrice $I_{SR}$, avec i multiple de $FSR_X$ tel que $0 \leq i < N_X$, j multiple de $FSR_Y$ tel que $0 \leq j < N_Y$, k multiple de $FSR_Z$ tel que $0 \leq k < N_Z$, et avec a, b, c des variables entières telles qu'elles prennent leurs valeurs dans l'ensemble 0, 1, 2, ..., $FSR_X$-1 (respectivement $FSR_Y$-1, $FSR_Z$-1) ;

{$A_{uvw}$, avec $0 \leq u < FSR_X$ ; $0 \leq v < FSR_Y$ $0 \leq w < FSR_Z$ } est l'ensemble des images 3D de basse résolution, où u, v, w représentent l'indice de la position de l'image dans respectivement les dimensions X, Y et Z ;

$A_{uvw}(p, q, r)$ désigne le voxel de l'image $A_{uvw}$ se trouvant à la coordonnée p de la dimension X, la coordonnée q de la dimension Y et la coordonnée r de la dimension Z de la matrice $A_{uvw}$, avec $p = \dfrac{i}{FSR_X}$ ; $q = \dfrac{j}{FSR_Y}$ ; $r = \dfrac{k}{FSR_Z}$.

**2.** Procédé selon la revendication 1, **caractérisé en ce que** ladite fonction d'étalement de points est un filtre passe-bas moyenneur qui correspond à une convolution par une matrice 3D de dimensions $FSR_X$, $FSR_Y$, $FSR_Z$ à valeurs uniformes : $I_{SR} = J_{SR} \otimes PSF$ où $J_{SR}$ est l'image nette, $\otimes$ représente un produit de convolution, et PSF est une matrice de dimensions $FSR_X$ x $FSR_Y$ x $FSR_Z$ dont les valeurs sont uniformes et égales en chaque point à la valeur $\dfrac{1}{FSR_X \times FSR_Y \times FSR_Z}$.

**3.** Procédé selon la revendication 1 ou la revendication 2, **caractérisé en ce que** ledit facteur de super-résolution est identique (FSR) dans chacune des trois dimensions.

**4.** Programme informatique comportant des instructions de code pour l'exécution des étapes du procédé de numérisation de livres selon l'une quelconque des revendications 1 à 3 lorsque ledit programme est exécuté par un processeur (5).

**5.** Support d'enregistrement lisible par un processeur (5) sur lequel est enregistré un programme informatique comprenant des instructions de code pour l'exécution des étapes du procédé de numérisation de livres selon l'une quelconque des revendications 1 à 3.

**Patentansprüche**

**1.** Verfahren zur Digitalisierung von geschlossenen Büchern, ohne sie öffnen zu müssen, von gedruckten oder handgeschriebenen Dokumenten, gebunden oder gebündelt, ohne sie trennen zu müssen, mittels eines Systems zur dreidimensionalen Bildgebung eines Objektes durch Terahertzwellen, umfassend einen Schritt zur Erfassung einer Menge von dreidimensionalen Bildern mit niedriger Auflösung $\{A_{uvw}\}$, welche für das Objekt repräsentativ sind, mittels eines THz-Erfassungs-Teilsystems, wobei die 3D-Bilder mit niedriger Auflösung durch Anwenden von Verschiebebewegungen in drei orthogonalen Dimensionen, wonach das Objekt und das THz-Erfassungs-Teilsystem relativ zueinander bewegt werden, erhalten werden, und wobei die Amplitude der Relativbewegung ($M_X$, My, $M_Z$) in jeder dieser drei Dimensionen gleich dem Verhältnis der räumlichen Auflösung ($rA_X$, $rA_y$, $rA_Z$) des THz-Erfassungs-Teilsystems durch einen Superauflösungsfaktor FSR ($FSR_X$, $FSR_Y$, $FSR_Z$) ist, einen Schritt zur dreidimensionalen Superauflösungsverarbeitung (E3), der geeignet ist, ein hochauflösendes 3D-Bild $I_{SR}$ anhand einer linearen Kombination der 3D-Bilder mit niedriger Auflösung zu erzeugen, und einen Schritt zur Bildwiederherstellung (E5), der geeignet ist, ein wiederhergestelltes, hochauflösendes 3D-Bild $J_{SR}$ anhand einer Entfaltung durch eine Punktstreuungsfunktion (PSF) des hochauflösenden 3D-Bildes $I_{SR}$ zu erzeugen, wobei die lineare Kombination der 3D-Bilder durch die folgende Gleichung bestimmt wird:

$$I_{SR}(i+a, j+b, k+c) = \frac{1}{FSR_X * FSR_Y * FSR_Z} \left[ \begin{array}{l} \sum_{u=0}^{a}\sum_{v=0}^{b}\sum_{w=0}^{c}A_{uvw}(p,q,r) + \sum_{u=a+1}^{FSR_X-1}\sum_{v=0}^{b}\sum_{w=0}^{c}A_{uvw}(p-1,q,r) \\ + \sum_{u=0}^{a}\sum_{v=b+1}^{FSR_Y-1}\sum_{w=0}^{c}A_{uvw}(p,q-1,r) + \sum_{u=a+1}^{FSR_X-1}\sum_{v=b+1}^{FSR_Y-1}\sum_{w=0}^{c}A_{uvw}(p-1,q-1,r) \\ + \sum_{u=0}^{a}\sum_{v=0}^{b}\sum_{w=c+1}^{FSR_Z-1}A_{uvw}(p,q,r-1) + \sum_{u=a+1}^{FSR_X-1}\sum_{v=0}^{b}\sum_{w=c+1}^{FSR_Z-1}A_{uvw}(p-1,q,r-1) \\ + \sum_{u=0}^{a}\sum_{v=b+1}^{FSR_Y-1}\sum_{w=c+1}^{FSR_Z-1}A_{uvw}(p,q-1,r-1) + \sum_{u=a+1}^{FSR_X-1}\sum_{v=b+1}^{FSR_Y-1}\sum_{w=c+1}^{FSR_Z-1}A_{uvw}(p-1,q-1,r-1) \end{array} \right]$$

worin:

$I_{SR}$ das hochauflösende Bild der Dimension $N_X$, Ny, $N_Z$ bezeichnet,
$FSR_X$, $FSR_Y$, $FSR_Z$ die Superauflösungsfaktoren entlang von X, Y und Z in einem orthonormalen Koordinaten-

system $\mathfrak{R}$ (O; X, Y, Z) bezeichnen, deren Werte natürliche ganze Zahlen größer als oder gleich 1 sind,
$I_{SR}$(i+a, j+b, k+c) das Voxel des Bildes $I_{SR}$ bezeichnet, das sich an der Koordinate i+a der Dimension X, der Koordinate j+b der Dimension Y und der Koordinate k+c der Dimension Z der Matrix $I_{SR}$ befindet, wobei i Vielfaches von $FSR_X$ ist, derart, dass $0 \leq i < N_X$, j Vielfaches von $FSR_Y$ ist, derart, dass $0 \leq j < Ny$, k Vielfaches von $FSR_Z$ ist, derart, dass $0 \leq k < N_Z$, und wobei a, b, c ganzzahlige Variablen sind, derart, dass sie ihre Werte aus der Menge 0, 1, 2, ..., $FSR_X$-1 (bzw. FSRy-1, $FSR_Z$-1) annehmen, $\{A_{uvw}$, mit 0 s u < $FSR_X$ ; 0 $\leq$v< $FSR_Y$ 0 $\leq$w< $FSR_Z\}$ die Menge der 3D-Bilder mit niedriger Auflösung ist, wobei u, v, w den Index der Position des Bildes in jeweils den Dimensionen X, Y und Z darstellen,
$A_{uvw}$(p, q, r) das Voxel des Bildes $A_{uvw}$ bezeichnet, das sich an der Koordinate p der Dimension X, der Koordinate q der Dimension Y und der Koordinate r der Dimension Z der Matrix $A_{uvw}$ befindet, mit

$$p = \frac{i}{FSR_X} \; ; \; q = \frac{j}{FSR_Y} \; ; \; r = \frac{k}{FSR_Z} \; .$$

**2.** Verfahren nach Anspruch 1, **dadurch gekennzeichnet, dass** die Punktstreuungsfunktion ein mittelwertbildendes Tiefpassfilter ist, das einer Faltung durch eine 3D-Matrix mit den Dimensionen $FSR_X$, $FSR_Y$, $FSR_Z$ mit einheitlichen Werten entspricht: $I_{SR} = J_{SR} \otimes PSF$, wobei $J_{SR}$ das scharfe Bild ist, $\otimes$ ein Faltungsprodukt darstellt und PSF eine Matrix mit den Dimensionen $FSR_X$ x $FSR_Y$ x $FSR_Z$ ist, deren Werte einheitlich und an jedem Punkt gleich dem Wert

$$\frac{1}{FSR_X \times FSR_Y \times FSR_Z}$$ sind.

**3.** Verfahren nach Anspruch 1 oder Anspruch 2, **dadurch gekennzeichnet, dass** der Superauflösungsfaktor in jeder der drei Dimensionen identisch (FSR) ist.

4. Computerprogramm, umfassend Codebefehle für die Durchführung der Schritte des Verfahrens zur Digitalisierung von Büchern nach einem der Ansprüche 1 bis 3, wenn das Programm durch einen Prozessor (5) ausgeführt wird.

5. Durch einen Prozessor (5) lesbarer Aufzeichnungsträger, auf dem ein Computerprogramm gespeichert ist, das Codebefehle für die Durchführung der Schritte des Verfahrens zur Digitalisierung von Büchern nach einem der Ansprüche 1 bis 3 umfasst.

**Claims**

1. A process for digitizing closed books without having to open them, printed documents or manuscripts, bound or in batches, without having to separate them, by means of an imaging system of a three-dimensional object by Terahertz waves comprising a step of acquisition by an THz acquisition subsystem of a set of low-resolution three-dimensional images $\{A_{uvw}\}$ representative of said object, said 3D low-resolution images being obtained by application of translation shifts in three orthogonal dimensions according to which the object and the THz acquisition subsystem are relatively shifted relative to each other, and the amplitude of said relative shift ($M_X$, $M_Y$, $M_Z$) in each of these three dimensions is equal to the ratio of the spatial resolution ($rA_x$, $rA_y$, $rA_z$) of said THz acquisition subsystem by a super-resolution factor (FSR; $FSR_X$, $FSR_Y$, $FSR_Z$), a step of three-dimensional super-resolution processing (E3), capable of generating a super-resolved 3D image $I_{SR}$ from a linear combination of said 3D low-resolution images and a step of image-restoration (E5) capable of generating a restored super-resolved 3D image $J_{SR}$ from deconvolution by a point spread function (PSF) of said super-resolved 3D image $I_{SR}$, said linear combination of said 3D images being determined by the following equation:

$$I_{SR}(i+a, j+b, k+c) = \frac{1}{FSR_X * FSR_Y * FSR_Z} \left[ \begin{array}{l} \sum_{u=0}^{a}\sum_{v=0}^{b}\sum_{w=0}^{c} A_{uvw}(p,q,r) + \sum_{u=a+1}^{FSR_X-1}\sum_{v=0}^{b}\sum_{w=0}^{c} A_{uvw}(p-1,q,r) \\ + \sum_{u=0}^{a}\sum_{v=b+1}^{FSR_Y-1}\sum_{w=0}^{c} A_{uvw}(p,q-1,r) + \sum_{u=a+1}^{FSR_X-1}\sum_{v=b+1}^{FSR_Y-1}\sum_{w=0}^{c} A_{uvw}(p-1,q-1,r) \\ + \sum_{u=0}^{a}\sum_{v=0}^{b}\sum_{w=c+1}^{FSR_Z-1} A_{uvw}(p,q,r-1) + \sum_{u=a+1}^{FSR_X-1}\sum_{v=0}^{b}\sum_{w=c+1}^{FSR_Z-1} A_{uvw}(p-1,q,r-1) \\ + \sum_{u=0}^{a}\sum_{v=b+1}^{FSR_Y-1}\sum_{w=c+1}^{FSR_Z-1} A_{uvw}(p,q-1,r-1) + \sum_{u=a+1}^{FSR_X-1}\sum_{v=b+1}^{FSR_Y-1}\sum_{w=c+1}^{FSR_Z-1} A_{uvw}(p-1,q-1,r-1) \end{array} \right]$$

where:

$I_{SR}$ designates the super-resolved image of dimension $N_X$, $N_Y$, Nz;

$FSR_X$, $FSR_Y$, $FSR_Z$ designate the factors of super-resolution according to X, Y and Z in a orthonormal marker $\Re$ (O; X, Y, Z), whereof the values are natural whole numbers greater than or equal to 1;

$I_{SR}(i+a, j+b, k+c)$ designates the voxel of the image $I_{SR}$ located at the coordinate i+a of the dimension X, the coordinate j+b of the dimension Y and the coordinate k+c of the dimension Z of the matrix $I_{SR}$, with i a multiple of $FSR_X$ such as $0 \leq i < N_X$, j a multiple of $FSR_Y$ such as $0 \leq j < N_Y$, k a multiple of $FSR_Z$ such as $0 \leq k < N_Z$, and with a, b, c whole variables such that they take their values in the set 0, 1, 2, ..., $FSR_X$-1 (respectively $FSR_Y$-1, $FSR_Z$-1) ;

$\{A_{uvw}$, with $0 \leq u < FSR_X$; $0 \leq v < FSR_Y$ $0 \leq w < FSR_Z\}$ is the set of 3D low-resolution images, where u, v, w represent the index of the position of the image in respectively the dimensions X, Y and Z;

$A_{uvw}(p, q, r)$ designates the voxel of the image $A_{uvw}$ located at the coordinate p of the dimension X, the coordinate q of the dimension Y and the coordinate r of the dimension Z of the matrix $A_{uvw}$, with $p = \dfrac{i}{FSR_X}$ ;

$q = \dfrac{j}{FSR_Y}$ ; $r = \dfrac{k}{FSR_Z}$ .

2. The process as claimed in Claim 1, **characterised in that** said point spread function is an average low-pass filter corresponding to a convolution by a 3D matrix of $FSR_X$, $FSR_Y$, $FSR_Z$ dimensions with uniform values: $I_{SR} = J_{SR} \otimes PSF$, where $J_{SR}$ is the sharp image, $\otimes$ is the convolution product and PSF is a matrix of $FSR_X$ X $FSR_Y$ X $FSR_Z$ dimensions which values are uniform and equal at each point to

$$\frac{1}{FSR_X \times FSR_Y \times FSR_Z}.$$

3. The process as claimed in Claim 1 or Claim 2, **characterised in that** said super-resolution factor is identical (FSR) in each of the three dimensions.

4. A computer program comprising code instructions for execution of the steps of the process for digitizing books as claimed in any one of Claims 1 to 3 when said program is run by a processor (5).

5. A substrate recording readable by a processor (5) on which is recorded a computer program comprising code instructions for execution of the steps of the process for digitizing books as claimed in any one of Claims 1 to 3.

**FIG.1**

EP 2 345 238 B1

FIG.2

**FIG.3**

EP 2 345 238 B1

FSRx,FSRy,FSRz

50

Traitement par
un algorithme de
Super-Résolution
en 3D

$\{A_{uvw}\}$

$I_{SR}$

52

Restauration
d'image
Super-résolue
en 3D

$J_{SR}$

FSRx,FSRy,FSRz

522

PSF

520

Calcul de la PSF

**FIG.4**

**FIG.5**

**EP 2 345 238 B1**

**RÉFÉRENCES CITÉES DANS LA DESCRIPTION**

**Documents brevets cités dans la description**

- US 7119339 B